# EUROPEAN PATENT APPLICATION

(11) **EP 4 703 260 A1**
(43) Date of publication of application: **04.03.2026**
(21) Application number: 24196600.1
(22) Date of filing: 27.08.2024
(51) Int. Cl.: B64C 1/22, B64D 9/00, B64U 30/10, B64U 30/20, B64U 101/64

(54) **UNMANNED AERIAL VEHICLE FOR PAYLOAD DELIVERY**

(71) Applicant: Rigi Technologies SA, 1008 Prilly (CH)
(72) Inventor: ORIOL, López Guirao, 1004 Lausanne (CH); STONE, Julien Olivier Samuel, 1020 Renens (CH)
(74) Representative: Germain Maureau

(57) **Abstract**

The invention relates to an unmanned aerial vehicle (UAV) (100) comprising:
- a fuselage body (110) including an internal cavity (112) adapted to receive a payload storing compartment (120),
- a payload storing compartment (120) having a central hollow space (122) extending therethrough, the central hollow space (122) forming a cargo bay for transporting a payload (P),
wherein the payload storing compartment (120) is pivotally movable relative to the fuselage body (110) between at least three different positions, namely a closed position, in which the payload storing compartment (120) fills the internal cavity (112) and is flush with an outer periphery of the fuselage body (110), a first loading/unloading position, in which a payload (P) can be loaded into the central hollow space (122) from an upper side of the payload storing compartment (120), and a second loading/unloading position, in which a payload (P) can be loaded into the central hollow space (122), respectively unloaded therefrom, from a lower side of the payload storing compartment (120).

## Description

This invention relates to an unmanned aerial vehicle for payload delivery.

Unmanned Aerial Vehicles (UAVs), commonly known as drones, are aircraft without a human pilot onboard. They are controlled either autonomously by onboard computers or by remote control from the ground. UAVs vary widely in size, range, and capabilities, and their applications span numerous fields, including surveillance, agriculture, search and rescue, and payload delivery.

The use of UAVs for payload delivery has gained significant attention due to their potential to revolutionize logistics and distribution. Indeed, UAVs can reduce delivery times, especially for last-mile deliveries. They can reach areas that are difficult for traditional vehicles, such as remote regions or urban areas with heavy traffic. They lower the operational costs compared to manned vehicles and reduced labor costs. Furthermore, electric drones produce lower emissions compared to conventional delivery trucks.

Companies specializing in payload delivery via UAVs develop innovative solutions in technology to enhance efficiency of the loading and unloading operation of the payloads. In particular, automated solutions for loading payloads into the UVAs have been implemented to enhance efficiency and reduce human intervention in drone operation.

One solution uses robotic arms integrated into a drone's docking platform. These arms can handle, load, and secure the payload into the drone's cargo bay. These arms are often equipped with sensors and cameras for precise manipulation. This solution has the major disadvantages of being expensive and inadapted for a manual loading. Furthermore, this solution generally allows loading of the payload from the top only and not loading from the bottom of the drone. Bottom loading is proposed in other known solutions but in this case, top loading is not possible.

Accordingly, there is a need for delivery systems using UAVs avoiding the above mentioned drawbacks.

An object of the present invention is to provide an unmanned aerial vehicle (UAV) that alleviates the drawbacks of the prior art, and, in particular, that allows both manual and automated loading and unloading of a payload from the bottom and/or from the top of the UAV.

According to an embodiment of the invention, the invention relates to an unmanned aerial vehicle (UAV) comprising:
- a fuselage body including an internal cavity adapted to receive a payload storing compartment,
- a payload storing compartment having a central hollow space extending therethrough, the central hollow space forming a cargo bay for transporting a payload,
wherein the payload storing compartment is pivotally movable relative to the fuselage body between at least three different positions, namely a closed position, in which the payload storing compartment fills the internal cavity and is flush with an outer periphery of the fuselage body, a first loading/unloading position, in which a payload can be loaded into the central hollow space from an upper side of the payload storing compartment, and a second loading/unloading position, in which a payload can be loaded into the central hollow space, respectively unloaded therefrom, from a lower side of the payload storing compartment.

Thus configured, the UAV of the invention allows a manual or automatic loading and unloading of a payload from the top of the UAV, in the first loading/unloading position of the payload storing compartment, and an automated loading and unloading of a payload from the bottom of the UAV, in the second loading/unloading position of the payload storing compartment. The payload may be safely transported by the UAV to its destination when stored in the central hollow space of the payload storing compartment, said payload storing compartment being in its closed position.

According to other characteristics, the UAV of the invention comprises one or more of the following optional characteristics considered alone or in all possible combinations:
- the UAV further comprises displacing means adapted to pivotally move the payload storing compartment relative to the fuselage body.
- the displacing means comprise a plunger adapted to modify the length of a rod that is connected to one end of a pivoting element, which is pivotally connected to the fuselage body and fixedly connected to the payload storing compartment, in such a manner that, in a first length of the rod, the payload storing compartment is in its closed position, in a second length of the rod, the payload storing compartment is in its first loading/unloading position, and, in a third length of the rod, the payload storing compartment is in its second loading/unloading position.
- the displacing means comprise a motor adapted to modify the angular position of a threaded shaft that is engaged with a threaded wheel, which is rotatably connected to the fuselage body and fixedly connected to the payload storing compartment, in such a manner that, in a first angular position of the threaded shaft, the payload storing compartment is in its closed position, in a second angular position of the threaded shaft, the payload storing compartment is in its first loading/unloading position, and, in a third angular position of the threaded shaft, the payload storing compartment is in its second loading/unloading position.
- the payload storing compartment relative to the fuselage body at a first angle when it moves from its closed position to its first loading/unloading position and vice versa, and at a second angle when it moves from its closed position to its second loading/unloading position and vice versa, the first angle being smaller than the second angle.
- the payload storing compartment pivots relative to the fuselage body (110) at 45° when it moves from its closed position to its first loading/unloading position and vice versa, and at 60° when it moves from its closed position to its second loading/unloading position and vice versa.
- the central hollow space has a parallelepiped shape.
- the payload storing compartment has a top access aperture, said top access aperture opening into the central hollow space and being adapted to receive or remove a payload from the top when the payload storing compartment is in its first loading/unloading position, and a bottom access aperture, said bottom access aperture opening into the central hollow space and being adapted to receive a payload from the bottom, or drop the payload to the floor or a reception place like a droneport or a post office box, when the payload storing compartment is in its second loading/unloading position.
- the bottom access aperture is at least partially closed by an inner wall of the fuselage body in the first loading/unloading position of the payload storing compartment.
- the inner wall has a concave curved shape that is substantially complementary to the shape of an outer wall of the payload storing compartment.
- the internal cavity is defined by at least one wall of the fuselage body against which the payload storing compartment abuts in its closed position.
- the central hollow space is aligned with a vertical orientation when the payload storing compartment is in its first loading/unloading position.
- the UAV further comprises a plurality of propulsion mechanisms coupled to and positioned around the fuselage body, the propulsion mechanisms being adapted to generate a force allowing the UAV to take off and land vertically, to maneuver in any direction and/or to hover.
- the UAV further comprises a ring wing coupled to and positioned around the fuselage body, said ring wing having a substantially parallelepiped shape.

Additional features and advantages are disclosed in the following description, claims, and drawings.

Examples are described in more detail below with reference to the appended drawings.
FIG. 1 is an isometric view of an example unmanned aerial vehicle (UAV) according to an example embodiment.
FIGs. 2a and 2b are side views of a first example of a fuselage body implemented in the UAV of FIG. 1, the payload storing compartment being respectively in its closed position and its first loading/unloading position.
FIGs. 3a and 3b are side views of a second example of a fuselage body implemented in the UAV of FIG. 1, the payload storing compartment being respectively in its closed position and its first loading/unloading position.
FIGs. 4a-4c are cross-sectional side views of the fuselage body of FIGs. 2a-2b, the payload storing compartment being respectively in its closed position, its first loading/unloading position and its second loading/unloading position.

The detailed description set forth below provides information and examples of the disclosed technology with sufficient detail to enable those skilled in the art to practice the invention.

Exemplary unmanned aerial vehicles are described herein. It should be understood that the word "exemplary" is used herein to mean "serving as an example, instance, or illustration." Any implementation or feature described herein as "exemplary" or "illustrative" is not necessarily to be construed as preferred or advantageous over other implementations or features. In the figures, similar symbols typically identify similar components, unless context dictates otherwise. The example implementations described herein are not meant to be limiting.

Herein, the terms "unmanned aerial vehicle" and "UAV" refer to any autonomous or semi-autonomous vehicle that is capable of performing some functions without a physically present human pilot. A UAV can take various forms. For example, a UAV may take the form of a fixed- wing aircraft, a glider aircraft, a tail-sitter aircraft, a jet aircraft, a ducted fan aircraft, a lighter-than-air dirigible such as a blimp or steerable balloon, a rotorcraft such as a helicopter or multicopter, and/or an ornithopter, among other possibilities. Further, the term "drone" may also be used to refer to a UAV.

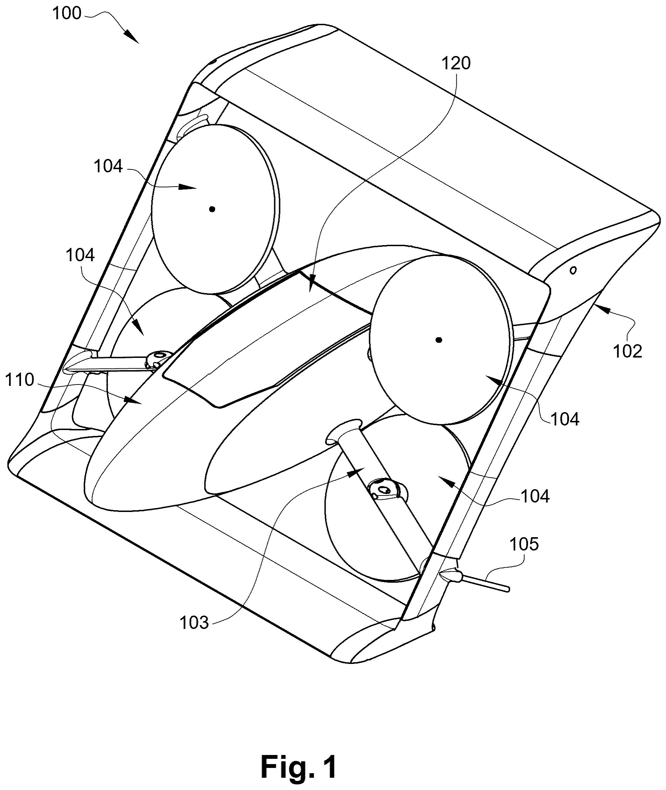

FIG. 1 illustrates an isometric view of an unmanned aerial vehicle 100 with a ring wing 102 that surrounds a plurality of propulsion mechanisms 104 and a fuselage body 110.

The UAV 100 is a rotorcraft that may also be referred as a quadcopter, as it includes four propulsion mechanisms 104. It should be understood that other example embodiments may involve a rotorcraft with more or fewer propulsion mechanisms.

Each propulsion mechanism 104 may include a motor rotating a corresponding propeller. The propeller may be any form of propeller and of any size. The form and/or size of some of the propellers may be different than other propellers. Likewise, the motor may be any form of motor, such as a DC brushless motor, and may be of a size sufficient to rotate the corresponding propeller. In some implementations, the motors may be rotated in either direction such that the force generated by the propellers may be either a positive force, when rotating in a first direction, or a negative force, when rotating in the second direction.

In other implementations, other forms of propulsion may be utilized as propulsion mechanisms 104. For example, one or more of the propulsion mechanisms 104 of the UAV 100 may utilize fans, jets, turbojets, turbo fans, jet engines, and/or the like to maneuver the UAV. Generally described, a propulsion mechanism 104, as used herein, includes any form of propulsion mechanism that is capable of generating a force sufficient to maneuver the UAV, alone and/or in combination with other propulsion mechanisms. Furthermore, in selected implementations, propulsion mechanisms 104 may be configured such that their individual orientations may be dynamically modified (e.g., change from vertical to horizontal flight orientation) or any position therebetween.

Likewise, while the examples herein describe the propulsion mechanisms being able to generate force in either direction, in some implementations, the propulsion mechanisms may only generate force in a single direction. However, the orientation of the propulsion mechanism may be adjusted so that the force can be oriented in a positive direction, a negative direction, and/or any other direction.

The UAV 100 also includes a ring wing 102 having a substantially cylindrical shape that extends around and forms the perimeter of the aerial vehicle 100. In the illustrated example, the ring wing is substantially parallelepiped in shape. The ring wing 102 has an airfoil shape to produce lift when the aerial vehicle is oriented as illustrated in FIG. 1 and moving in a direction that is substantially horizontal. As illustrated, the ring wing 102 is positioned at an angle with respect to the fuselage body 110 such that the lower part of the ring wing 102 acts as a front wing as it is positioned toward the front of the aerial vehicle when oriented as shown and moving in a horizontal direction. The top of the ring wing, which has a longer chord length than the bottom portion of the ring wing 102, is positioned farther back and thus acts as a rear wing.

The ring wing 102 is secured to the fuselage body 110 by connecting arms 103. In the illustrated example, each connecting arm 103 is coupled to the fuselage body 110 at one end, extend from the fuselage body 110 and couple to the ring wing 102 at a second end, thereby securing the ring wing 102 to the fuselage body 110.

The ring wing 107, the connecting arms 103, and the fuselage body 110 of the UAV 100 may be formed of any one or more suitable materials, such as plastics, carbon fiber, and/or aluminum.

Each propulsion mechanism 104 is coupled to a respective connecting arm 103 such that the propulsion mechanism 104 is substantially contained within the perimeter of the ring wing 102. In the illustrated example, each propulsion mechanism 104 is coupled at an approximate mid-point of the respective connecting arm 103 between the fuselage body 110 and the ring wing 102. In other implementations, the propulsion mechanisms may be coupled at other locations along the connecting arm.

As illustrated, the propulsion mechanisms 104 may be oriented at different angles with respect to each other. For example, one or several propulsion mechanisms 104 may be aligned with the fuselage body 110 such that the force generated by said propulsion mechanisms 104 is in-line or in the same direction or orientation as the fuselage body 110. In the illustrated example, the UAV 100 is oriented for horizontal flight such that the fuselage body 110 is oriented horizontally in the direction of travel. In such an orientation, two propulsion mechanisms 104 provide horizontal forces, also referred to herein as thrusting forces, and act as thrusting propulsion mechanisms.

In other implementations, one or several propulsion mechanisms 104 may be offset or angled with respect to the orientation of the fuselage body 110. When the UAV 100 is oriented horizontally as shown in FIG. 1 for horizontal flight, two propulsion mechanisms 104 may be used to provide thrust in a non-horizontal direction to cause the UAV to pitch, yaw, roll, heave and/or sway. In further other implementations, during horizontal flight, one or several propulsion mechanisms 104 may be disabled such that they do not produce any forces and the UAV 100 may be propelled aerially in a horizontal direction as a result of the lifting force from the aerodynamic shape of the ring wing 102 and the horizontal thrust produced by the thrusting propulsion mechanisms.

As illustrated in FIG. 1, the UVA 100 may also include one or more landing gears 105 extending from a lower edge of the ring wing 102. The landing gears 105 may be permanently affixed to the ring wing 102, or, in some example embodiments, may be retracted into the interior of the ring wing 102 and/or may be rotated up and remain along the trailing edge of the ring wing 102.

The fuselage body 110 is used to store a payload. Thus, as detailed in the following paragraphs, the fuselage body 110 houses a payload storing compartment 120. The fuselage body 110 may also be used to store one or more components of the UAV, such as a control unit, and/or a power unit. The power unit may be removably mounted to the UAV. The power unit may be, for example, in the form of battery power, solar power, gas power, super capacitor, fuel cell, alternative power generation source, or a combination thereof. The power unit may be coupled to and provide power to the control unit, the propulsion mechanisms 104, and/or devices for displacing the payload storing compartment 120.

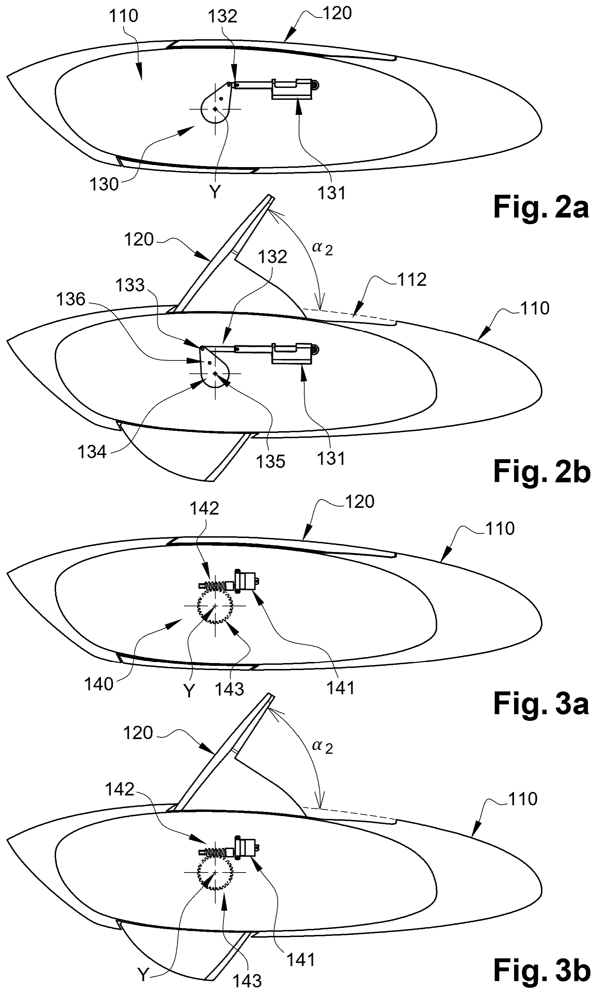

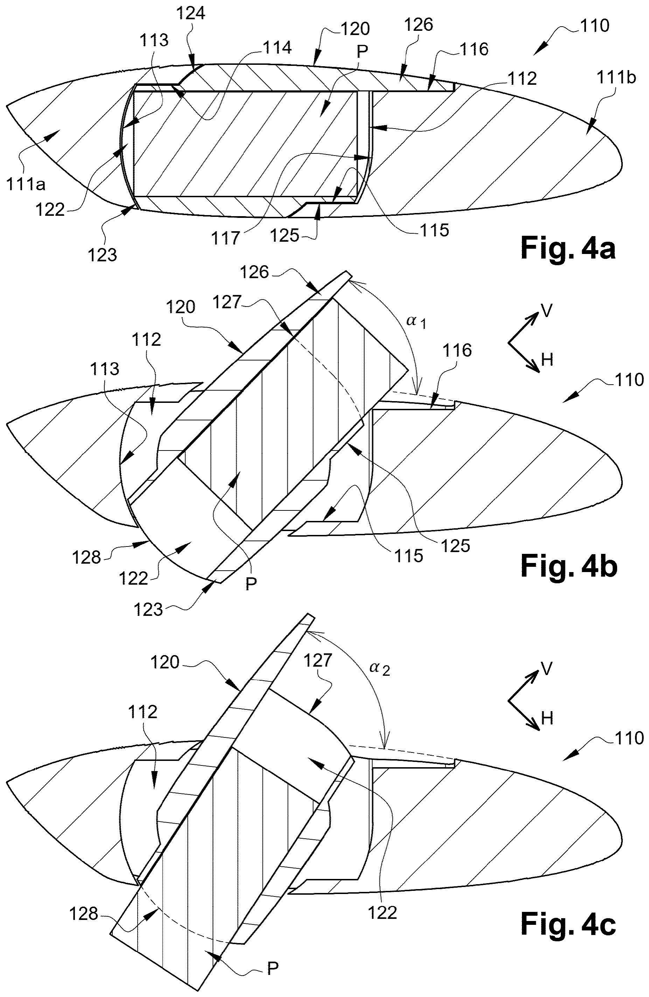

As illustrated in FIGs. 2a and 2b, or FIGs. 3a and 3b, the payload storing compartment 120 may pivot around a pivot axis Y relative to the fuselage body 110 between a first position, illustrated in FIG. 2a or FIG. 3a, referred below as "the closed position", and a second position, illustrated in FIG. 2b or FIG. 3b, referred below as "the second loading/unloading position". The closed position and the second loading/unloading position are also shown in FIG. 4a and FIG. 4c respectively. The payload storing compartment 120 may also be positioned in a third position, illustrated in FIG. 4b, referred below as "the first loading/unloading position". The closed position corresponds to the position required when the UAV is flying. Indeed, this position provides a flush configuration that is optimized to minimize aerodynamic drag and optimize efficiency. The first loading/unloading position corresponds to the position required to allow a manual or automatic loading or unloading of the payload from the top and the second loading/unloading position corresponds to the position required to allow a manual or automatic loading or unloading of the payload from the bottom.

The pivoting movement of the payload storing compartment 120 may be done by various displacing systems.

In the embodiment of FIGS. 2a-2b, the displacing system 130 comprises a plunger 131 adapted to modify the length of a rod 132 that is connected to one end 133 of a pivoting element 134. The pivoting element 134 is pivotally connected to the fuselage body 110 at a first connecting point 135 and is fixedly connected to the payload storing compartment 120 at a second connecting point 136. By modifying the length of the rod 132, the plunger 131 can modify the angular position of the pivoting element 134, and, thus, of the payload storing compartment 120, relative to the fuselage body 110. Accordingly, in the closed position of the payload storing compartment 120, the rod 132 has a minimum length, as illustrated in FIG. 2a. When the length of the rod 132 increases to reach a second value, the payload storing compartment 120 pivots at angle α1 from its closed position to reach its first loading/unloading position, illustrated in FIG. 4b, the angle α1 being preferably equal to 45°. When the length of the rod 132 increases to reach a third value, the payload storing compartment 120 pivots at angle α2 from its closed position to reach its second loading/unloading position, as illustrated in FIG. 2b, the angle α2 being preferably equal to 60°.

In other embodiments of the invention, the angle α1 may be different from 45° and the angle α2 may be different from 60°, since the angle α1 is smaller than the angle α2.

In the embodiment of FIGS. 3a-3b, the displacing system 140 comprises a motor 141 adapted to modify the angular position of a threaded shaft 142 that is engaged with a threaded wheel 143. The threaded wheel 143 is rotatably connected to the fuselage body 110 and fixedly connected to the payload storing compartment 120. By modifying the angular position of the threaded shaft 142, the motor 141 can modify the angular position of the threaded wheel 143, and, thus, of the payload storing compartment 120, relative to the fuselage body 110. Accordingly, in the closed position of the payload storing compartment 120, the threaded shaft 142 has a first angular position, as illustrated in FIG. 3a. When the angular position of the threaded shaft 142 changes to reach a second angular position, the payload storing compartment 120 pivots at angle α1 from its closed position to reach its first loading/unloading position, illustrated in FIG. 4b, the angle α1 being preferably equal to 45°. When the angular position changes to reach a third angular position, the payload storing compartment 120 pivots at angle α2 from its closed position to reach its second loading/unloading position, as illustrated in FIG. 3b, the angle α2 being preferably equal to 60°.

In other embodiments of the invention, the angle α1 may be different from 45° and the angle α2 may be different from 60°, since the angle α1 is smaller than the angle α2.

Other displacing systems may used to pivotally move the payload storing compartment 120. In particular, a servo actuator or normal spur gears are other alternative displacing systems.

Furthermore, the payload storing compartment 120 may be locked in its closed position by various locking systems. Such locking systems are adapted to avoid an undesired drop of the payload during the flight of the UAV if the displacing systems malfunction.

The different positions of the payload storing compartment 120 are further illustrated in FIGs. 4a-4c.

In its closed position shown in FIG. 4a, the payload storing compartment 120 fills an internal cavity 112 of the fuselage body 110 and is flush with an outer periphery of the fuselage body 110. The internal cavity 112 is surrounded by several inner walls of the fuselage body 110. A first inner wall 113 formed in a rear part 111a of the fuselage body 110 has a concave curved shape that is substantially complementary to the shape of a first outer wall 123 of the payload storing compartment 120. A second inner wall 114 formed in the rear part 111a of the fuselage body 110 has a wedge shape that is substantially complementary to the shape of an second outer wall 124 of the payload storing compartment 120. A third inner wall 115 formed in a front part 111b of the fuselage body 110 has a wedge shape that is substantially complementary to the shape of a third outer wall 125 of the payload storing compartment 120. A fourth inner wall 116 formed in the front part 111b of the fuselage body 110 has a planar shape, a front edge 126 of the payload storing compartment 120 abutting against said fourth inner wall 126 in the closed position thereof.

The payload storing compartment 120 has a central hollow space 122 extending from a top access aperture 127 (see FIG. 4c), at a front side of the payload storing compartment 120, to a bottom access aperture 128 (see FIG. 4b), at a rear side of the payload storing compartment 120. The central hollow space 122 forms a cargo bay for transporting a payload P. The central hollow space 122 may advantageously have a complementary shape to the one of the payload P. In the embodiment shown, this shape is a parallelepiped. In the closed position, the central hollow space 122 is entirely closed by the first inner wall 113 that faces the bottom access aperture 128 and by a fifth inner wall 117 formed in the front part 111b of the fuselage body 110 and facing the top access aperture 127. Thus positioned, the payload storing compartment 120 prevents premature unloading of the payload P when the UAV 100 moves to its delivery destination.

In its first loading/unloading position shown in FIG. 4b, the payload storing compartment 120 is inclined at an angle α1 with regard to its closed position, the central hollow space 122 being aligned with a vertical orientation V and the fuselage body 110 being at angle with respect to said vertical orientation V. When the UAV stands on the ground, this vertical orientation V may advantageously be oriented perpendicular to a horizontal plane H defined by the ground. Thus positioned, the payload storing compartment 120 permits a loading or an unloading of the payload P inside the central hollow space 122 through the top access aperture 127, which is no longer closed by the fifth inner wall 117 of the fuselage body 110. This loading or unloading may be carried out manually from the top by a person positioned above the UAV, due to the vertical orientation of the cargo bay, the top access aperture 127 being directed upwards. The unloading may also be carried out by an automatic device, such as a robotic arm, a droneport or a specialized equipment. The bottom access aperture 128 being partially closed by the first inner wall 113 of the fuselage body 110, a loading and/or an unloading of said payload P through said bottom access aperture 128 is prevented.

In its second loading/unloading position shown in FIG. 4c, the payload storing compartment 120 is inclined at an angle α2 with regard to its closed position, the central hollow space 122 and the fuselage body 110 being at angle with respect to the vertical orientation V. Thus positioned, the payload storing compartment 120 permits a loading of the payload P inside the central hollow space 122, or an unloading of the payload P from the central hollow space 122, through the bottom access aperture 128, which is no longer closed by the first inner wall 113 of the fuselage body 110. This loading and/or this unloading may be carried out automatically by a loading/unloading system positioned below the UAV, due to the almost vertical orientation of the cargo bay, the bottom access aperture 128 being directed downwards. The unloading may merely consist to drop the payload P to the floor or a reception place like a droneport or a post office box.

Although the invention has been described and illustrated with respect to illustrative implementations thereof, the foregoing and various other additions may be made therein and thereto without departing from the scope of the present disclosure.

## Claims

1. An unmanned aerial vehicle (UAV) (100) comprising:
- a fuselage body (110) including an internal cavity (112) adapted to receive a payload storing compartment (120),
- a payload storing compartment (120) having a central hollow space (122) extending therethrough, the central hollow space (122) forming a cargo bay for transporting a payload (P),
wherein the payload storing compartment (120) is pivotally movable relative to the fuselage body (110) between at least three different positions, namely a closed position, in which the payload storing compartment (120) fills the internal cavity (112) and is flush with an outer periphery of the fuselage body (110), a first loading/unloading position, in which a payload (P) can be loaded into the central hollow space (122) from an upper side of the payload storing compartment (120), and a second loading/unloading position, in which a payload (P) can be loaded into the central hollow space (122), respectively unloaded therefrom, from a lower side of the payload storing compartment (120).

2. The UAV (100) of claim 1, further comprising displacing means (130, 140) adapted to pivotally move the payload storing compartment (120) relative to the fuselage body (110).

3. The UAV (100) of claim 2, wherein said displacing means (130) comprise a plunger (131) adapted to modify the length of a rod (132) that is connected to one end (133) of a pivoting element (134), which is pivotally connected to the fuselage body (110) and fixedly connected to the payload storing compartment (120), in such a manner that, in a first length of the rod (132), the payload storing compartment (120) is in its closed position, in a second length of the rod (132), the payload storing compartment (120) is in its first loading/unloading position, and, in a third length of the rod (132), the payload storing compartment (120) is in its second loading/unloading position.

4. The UAV (100) of claim 2, wherein said displacing means (140) comprise a motor (141) adapted to modify the angular position of a threaded shaft (142) that is engaged with a threaded wheel (143), which is rotatably connected to the fuselage body (110) and fixedly connected to the payload storing compartment (120), in such a manner that, in a first angular position of the threaded shaft (142), the payload storing compartment (120) is in its closed position, in a second angular position of the threaded shaft (142), the payload storing compartment (120) is in its first loading/unloading position, and, in a third angular position of the threaded shaft (142), the payload storing compartment (120) is in its second loading/unloading position.

5. The UAV (100) of any of claims 1-4, wherein the payload storing compartment (120) pivots relative to the fuselage body (110) at a first angle (α1) when it moves from its closed position to its first loading/unloading position and vice versa, and at a second angle (α2) when it moves from its closed position to its second loading/unloading position and vice versa, the first angle (α1) being smaller than the second angle (α2).

6. The UAV (100) of claim 5, wherein the payload storing compartment (120) pivots relative to the fuselage body (110) at 45° when it moves from its closed position to its first loading/unloading position and vice versa, and at 60° when it moves from its closed position to its second loading/unloading position and vice versa.

7. The UAV (100) of any of claims 1-6, wherein the central hollow space (122) has a parallelepiped shape.

8. The UAV (100) of any of claims 1-7, wherein the payload storing compartment (120) has a top access aperture (127), said top access aperture (127) opening into the central hollow space (122) and being adapted to receive or remove a payload (P) from the top when the payload storing compartment (120) is in its first loading/unloading position, and a bottom access aperture (128), said bottom access aperture (128) opening into the central hollow space (122) and being adapted to receive a payload (P) from the bottom, or drop the payload (P) to the floor or a reception place like a droneport or a post office box, when the payload storing compartment (120) is in its second loading/unloading position.

9. The UAV (100) of claim 8, wherein the bottom access aperture (128) is at least partially closed by an inner wall (113) of the fuselage body (110) in the first loading/unloading position of the payload storing compartment (120).

10. The UAV (100) of claim 9, wherein the inner wall (113) has a concave curved shape that is substantially complementary to the shape of an outer wall (123) of the payload storing compartment (120).

11. The UAV (100) of any of claims 1-10, wherein the internal cavity (112) is defined by at least one wall (116) of the fuselage body (110) against which the payload storing compartment (120) abuts in its closed position.

12. The UAV (100) of any of claims 1-11, wherein the central hollow space (122) is aligned with a vertical orientation (V) when the payload storing compartment (120) is in its first loading/unloading position.

13. The UAV (100) of any of claims 1-12, further comprising a plurality of propulsion mechanisms (104) coupled to and positioned around the fuselage body (110), the propulsion mechanisms (104) being adapted to generate a force allowing the UAV (100) to take off and land vertically, to maneuver in any direction and/or to hover.

14. The UAV (100) of any of claims 1-13, further comprising a ring wing (102) coupled to and positioned around the fuselage body (110), said ring wing (102) having a substantially parallelepiped shape.
